# EUROPÄISCHE PATENTSCHRIFT

(11) **EP 0 615 611 B1**
(45) Veröffentlichungstag und Bekanntmachung des Hinweises auf die Patenterteilung: **08.05.1996**
(21) Anmeldenummer: 93920655.3
(22) Anmeldetag: 21.09.1993
(51) Int. Cl.: G01F 23/26

(54) **VORRICHTUNG ZUR BEFESTIGUNG EINES GEHÄUSES**
DEVICE FOR SECURING A HOUSING
DISPOSITIF POUR LA FIXATION D'UN BOITIER

(30) Priorität: 05.10.1992 DE 4233315
(43) Veröffentlichungstag der Anmeldung: 21.09.1994
(73) Patentinhaber: ENDRESS U. HAUSER GMBH U. CO., D-79689 Maulburg (DE)
(72) Erfinder: ROTTMAR, Werner, D-79585 Steinen (DE)
(86) Internationale Anmeldenummer: DE9300904
(87) Internationale Veröffentlichungsnummer: WO9408213

(56) Entgegenhaltungen:
- DE-A- 2 448 205
- DE-A- 3 337 481
- FR-A- 2 405 469
- US-A- 4 574 328

## Beschreibung

Die Erfindung bezieht sich auf eine Vorrichtung zur Befestigung eines Gehäuses, insbesondere eines Elektronikgehäuse eines Meßwertaufnehmers, mit einem Einschraubstück zur Befestigung des Meßwertaufnehmers in der das Meßmedium umschließenden Wandung, einem Sensor zur physikalischen Aufnahme des Meßwertes, und einer lösbaren Verbindung, durch welche das Elektronikgehäuse mit dem Einschraubstück verbunden und in seiner axialsymmetrischen Lage gegenüber dem Sensor festgelegt und gehalten ist.

Gehäuse dieser Art haben zur Aufgabe, die elektronischen Schaltungen sowie elektronischen Anschlußmittel von Sensoren gegenüber der Umwelt isolierend und schützend zu umschließen. Dies ist deshalb notwendig, weil solche Sensoren eingesetzt sind um physikalische Eigenschaften von Prozeßmedien zu detektieren. Dazu sind die Sensoren am Meßort den verschiedensten schädlichen Umgebungseinflüssen ausgesetzt.

Bei den Sensoren handelt es sich um physikalische Meßwertaufnehmer, mit deren Hilfe physikalische Eigenschaften von Prozeßmedien, z. B. Füllhöhe, Druck, Temperatur, usw. festgestellt werden. Ein solcher Meßwertaufnehmer kann z. B. eine kapazitive Sonde, ein Vibrationsgrenzschalter, ein Druck-, Temperatursensor, oder anderer Sensor sein. Zur Erfüllung ihrer Aufgabe weisen diese Meßwertaufnehmer außer den Mitteln zur physikalischen Aufnahme des Meßwertes auch noch elektrische Mittel auf, mit welchen der physikalische Meßwert in ein elektrisches Signal umgewandelt wird. Die elektrischen Mittel sind als elektronische Schaltung auf einer Leiterplatte realisiert.

Handelt es sich z. B. bei dem Meßwertaufnehmer um einen Vibrationsgrenzschalter, dessen Sensor zur Feststellung und/oder Überwachung des Füllstandes von Behältern zur Anwendung kommt, umschließt das Elektronikgehäuse noch weitere elektronische Schaltungen, deren Aufgabe es ist, den Sensor zu Schwingungen anzuregen. Aber auch die Anschlußmittel für die elektrischen Verbindungsleitungen, mit welchen der Meßwertaufnehmer die für seine Funktion notwendige elektrische Energie empfängt und daß elektrische Meßsignal an ein, entfernt vom Meßort angeordnetes Auswertegerät, oder einen Aktor übertragen wird, sind von dem Elektronikgehäuse umschlossen.

Es ist wegen der rauhen Umwelt am Meßort notwendig, daß die Verbindung zwischen Elektronikgehäuse und Einschraubstück zumindest staub- und spritzwasserdicht abgeschlossen ist. Weshalb der Verbindung zwischen diesen Teilen eine besondere Bedeutung für die Erhaltung der Funktionssicherheit solcher Meßwertaufnehmer zukommt.

Zum Anschließen der elektrischen Verbindungen an die von dem Elektronikgehäuse umschlossenen elektrischen Anschlußmittel ist es notwendig, daß das Elektronikgehäuse, trotz der durch die Funktion des Sensor und die Abdichtung gegenüber der Behälterwand, notwendige Einbaulage in seiner Lage entsprechend den Anschlußleitungen oder anderen störenden Verhältnissen axialsymmetrisch ausgerichtet werden muß. Es ist deshalb üblich, das Elektronikgehäuse so zu gestalten, daß es an dem Einschraubstück um einen bestimmten axialen Winkel drehbar befestigt ist und in einer für den Anschluß der Verbindungsleitungen günstigen Lagen wieder festgelegt werden kann.

Aus der DE-AS 27 44 864, insbesondere den Figuren 1, 2 und 3 ist eine kapazitive Sonde bekannt, welche aus den Teilen Sondenstab als Sensor, Einschraubstück zur Befestigung der Sonde in einer Behälterwand und dem Elektronikgehäuse besteht. Zur lösbaren Verbindung des Gehäuses sind an dem Einschraubstück drei symmetrisch verteilte Gewindebolzen angeordnet, welche unter Einschließen einer Dichtung und eines Klemmringes mittels Muttern eine lösbare Verbindung zwischen Elektronikgehäuse und Einschraubstück bilden.

Aus der GB-AS 15 18 818, insbesondere Figur 4, ist ebenfalls eine kapazitive Sonde bekannt, bei welcher zur lösbaren Verbindung zwischen Elektronikgehäuse und Einschraubstück anstelle von Stegbolzen und Muttern Zylinderschrauben und Gewindebohrungen die lösbare Verbindung bilden.

Der Nachteil aller dieser Befestigungen liegt darin, daß das Elektronikgehäuse gegenüber dem Sensor axial nur drei verschiedene Stellungen einnehmen kann und dazu alle drei Schraubverbindungen vollkommen gelöst, das Gehäuse gedreht und in der neuen Lage mittels der drei Schraubverbindungen wieder festgelegt werden muß. Außerdem ist bei jeder Veränderung der Lage des Gehäuses, die über der Schraubverbindung angeordnete elektrische Schaltung abzuschließen, zu demontieren, und nach dem Umsetzen wieder einzusetzen und anzuschließen. Außerdem stellen die drei Schraubverbindungen einen erheblichen Zeit- und Arbeitsaufwand dar.

Zur Verbesserung dieses Standes der Technik sind in der Praxis Verbindungen zwischen Elektronikgehäuse und Einschraubstück bekannt, bei welchen das Elektronikgehäuse stufenlos um fast 360° um seine Symmetrieachse gedreht werden kann, ohne daß dabei die elektronischen Schaltungen abgeschlossen oder eine Schraubverbindung gelöst werden muß. Eine solche Verbindung hat allerdings wieder den Nachteil, daß das Gehäuse in seiner Lage gegenüber dem Sensor nicht festgelegt werden kann, d. h. auch nach Anschluß der Verbindungsleitungen weiterhin drehbar ist, was sehr leicht zu einer Beschädigung der Anschlußleitungen führen kann.

Demgegenüber stellt sich die Erfindung die Aufgabe, eine staub- und spritzwasserdichte lösbare Verbindung zwischen Elektronikgehäuse und Einschraubstück vorzuschlagen, bei welcher, das Elektronikgehäuse ebenfalls axial stufenlos fast 360° um seine Symmetrieachse gedreht, in jeder beliebigen Lage zum Einschraubstück aber festgelegt und dazu leicht gelöst und wieder gesperrt werden kann. Außerdem ist durch die vorgeschlagene Lösung gewährleistet, daß die im Innern des Elektronikgehäuses angeordneten elektronischen Schaltungen auch bei Verdrehen des Gehäuses in ihrer Lage festgelegt sind.

Gelöst wird diese Aufgabe durch die in dem Patentanspruch 1 gekennzeichneten Merkmale.

Weitere Merkmale der Erfindung sind in den Unteransprüchen gekennzeichnet.

Die Erfindung soll anhand der Zeichnungen näher beschrieben werden.

In den Zeichnungen zeigen:
- Fig. 1: Die Darstellung eines Füllstandsmeßgerätes, bei welchem die Erfindung angewendet ist.
- Fig. 2: Einen Schnitt durch die Vorrichtung.
- Fig. 3: Einen Schnitt durch und die Draufsicht der Klemmscheibe, welche bei der Erfindung zur Anwendung kommt.

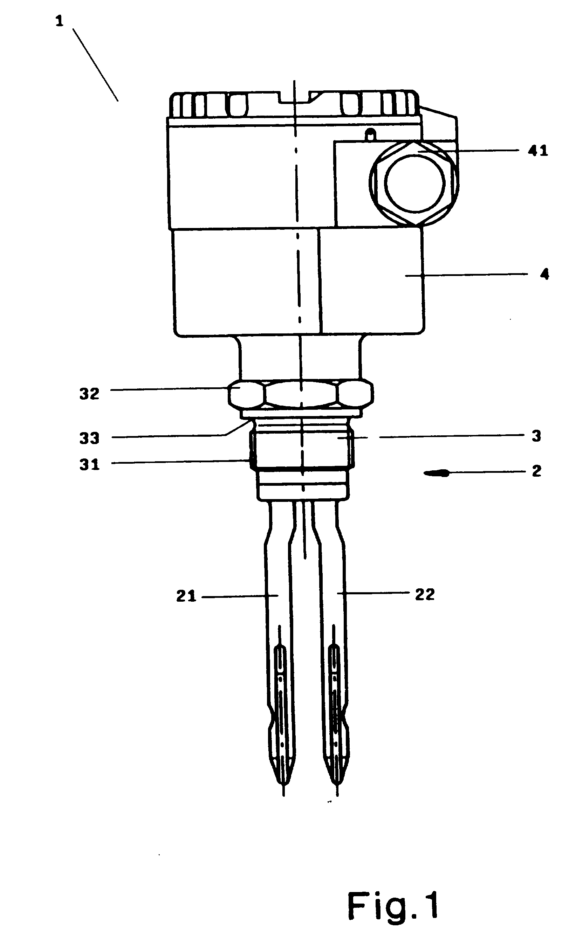

In Figur 1 ist ein Meßwertaufnehmer 1 dargestellt, welcher beispielhafterweise ein Füllstandsmeßgerät zur Messung und/oder Überwachung des Füllstandes eines nichtdargestellten Behälters sein soll. Das Füllstandsmeßgerät 1 ist so in der Wandung des Behälters angeordnet, daß es mit dem Meßmedium in Berührung kommen kann, wenn dieses einen vorbestimmten Füllstand erreicht hat. Das Füllstandsmeßgerät 1 ist aus dem Sensor 2, dem Einschraubstück 3 und dem Elektronikgehäuse 4 gebildet.

Das Einschraubstück 3 weist ein Gewinde 31 und einen Sechskant 32 auf. Der Sechskant 32 dient der Einleitung eines Drehmomentes, mit dessen Hilfe das Füllstandsmeßgerät 1 mit dem Gewinde 32 in eine, die Behälterwand durchdringende Gewindebohrung eingeschraubt ist. Zur Abdichtung der Gewindebohrung stützt sich das Einschraubstück 3 unter Einschließen eines nichtdargestellten Dichtringes mit der Dichtfläche 33 an der Behälterwand ab. Durch dieses dichtende Abstützen und von der Funktion bestimmt, nimmt das Füllstandsmeßgerät eine festgelegte Lage in der Behälterwand ein.

Zur Feststellung der Überdeckung durch das Füllgut der Sensor 2 und damit die Schwingstäbe 21, 22 von einer ersten, von dem Elektronikgehäuse 4 umschlossenen Erregungsschaltung in gegensinnige Schwingungen erregt. Wenn die Schwingstäbe mit dem Meßmedium in Verbindung kommen, ändert sich die Schwingfrequenz der Schwingstäbe 21, 22 und damit des Sensors. Zur Feststellung der Änderung der Schwingfrequenz weist das Füllstandsmeßgerät 1 eine weitere Schaltung auf, welche sich ebenfalls in dem Elektronikgehäuse 4 befindet. Zum Anschließen an die elektrischen Verbindungsleitungen, durch welche das Füllstandsmeßgerät 1 mit einer, vom Meßort entfernt angeordneten Meßwarte verbunden ist, und über welche das Füllstandsmeßgerät 1 die für die Funktion notwendige Energie bezieht, sowie ein dem Meßwert entsprechendes elektrisches Signal zu dieser Warte überträgt, sind die Verbindungsleitungen über die PG-Verschraubung 41 in das Gehäuse 4 eingeführt.

Sehr oft ist es nun der Fall, daß der Anschluß der Verbindungsleitungen in dem Elektronikgehäuse 4 nur sehr schwer möglich ist, weil das Elektronikgehäuse 4 eine Lage einnimmt in welcher die Einführungs- und Anschlußmittel sehr schwer zugänglich sind. Diese Schwierigkeit kann von den festverlegten Leitungen, aber auch von anderen beengten Verhältnissen des Meßorts bestimmt sein. Da jedoch die Lage des festgelegten Sensors in der Behälterwand nicht verändert werden darf, muß die Verbindung zwischen dem Einschraubstück 3 und dem Elektronikgehäuse 4 so gestaltet sein, daß das Elektronikgehäuse 4 seine Lage axial so verändern kann, daß das Gehäuse eine Stellung einnimmt, in der ein leichtes Anschließen der Verbindungsleitungen möglich ist.

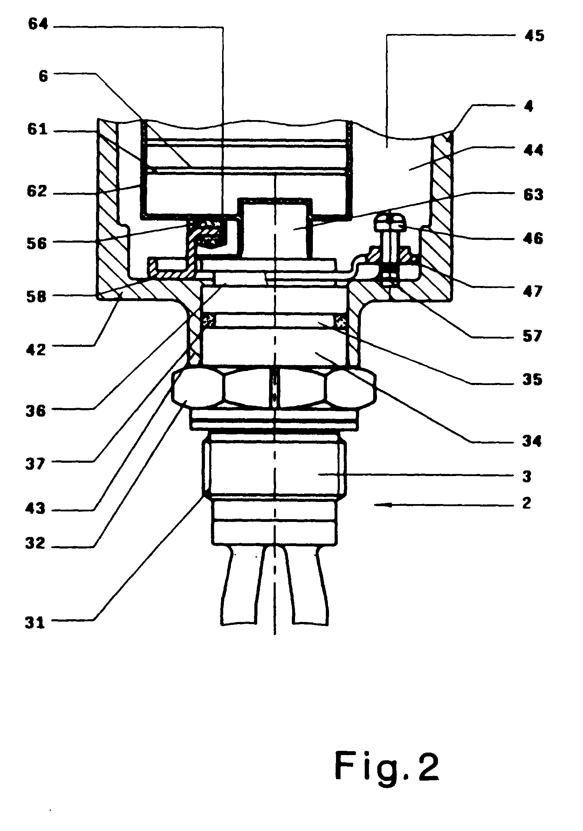

Figur 2 zeigt eine teilweisen Schnitt durch das Einschraubstück 3 und das Elektronikgehäuse 4. Auf der, dem Gewinde 31 abgewandten Seite, schließt sich an den Sechskant 32 der rohrförmige Zapfen 34 an. Der Zapfen 34 ist nicht von gleichbleibendem Durchmesser, sondern es sind zwei kurze Abschnitte 35, 36 kleineren Durchmessers angeformt. Zur Befestigung des Gehäuses 4 mit dem Einschraubstück 3 und zur Anordnung der Verbindungsleitungen zwischen dem Sensor und der elektronischen Schaltung ist an dem Boden 42 des Gehäuses 4 eine Hülse 43 angeformt. Der Zapfen 34 durchdringt die Hülse 43 vollkommen und ragt noch ein Stück in den Innenraum 44 des Gehäuses 4. Durch die kurzen Abschnitte 35, 36 kleineren Durchmessers sind zwei Nuten gebildet. In der Nut 35 ist ein ringförmiger Dichtring angeordnet, welcher den Innenraum 44 des Gehäuses 4 gegenüber der Umwelt staub- und spritzwasserdicht abdichtet.

Die elektrischen Schaltungen 6 des Füllstandsmeßgerätes 1 sind auf der Leiterplatte 61 durch nichtdargestellte elektronische Bauteile und Verbindungsleitungen gebildet. Zur elektrischen Isolation der Schaltungen 6 sind diese von dem Isolierkörper 62 umschlossen. Der Isolierkörper 62 durchdringt jedoch den Innenraum 44 des Gehäuses 4 nicht vollständig, sondern läßt einen Raum 45 von der Grundfläche eines Kreisabschnittes frei. An dem Boden des Isolierkörpers 62 ragt eine Isolierbuchse 63 ab, welche die inneren elektrischen Verbindungen zwischen dem Sensor 2 und den elektrischen Schaltungen 6 isolierend umschließt.

Die stufenlos um fast 360° drehbare und in jeder Stellung festlegbare lösbare Verbindung zwischen Einschraubstück 3 und Elektronikgehäuse 4 ist durch eine einzige leicht zugängliche Zylinderschraube 46 gebildet. Dazu durchdringt die Zylinderschraube 46 einen Klemmring 47. Der Klemmring 47 nimmt im eingesetzten Zustand eine Lage ein, bei welcher er von den Zapfen 34 durchdrungen ist und sich in der Nut 36 des Zapfens 34 abstützt.

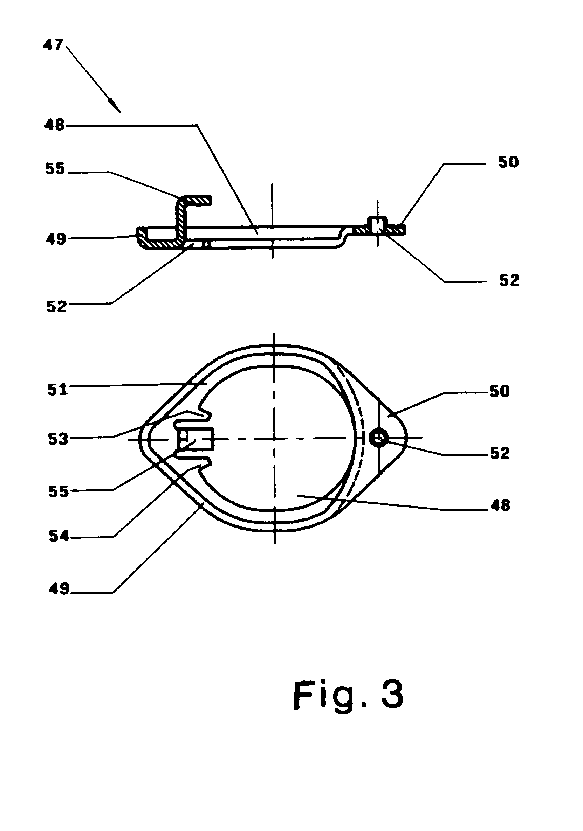

Figur 3 zeigt eine Schnitt durch und die Draufsicht des Klemmringes 47. Der Klemmring 47 ist etwa ellipsenförmig und von einer Öffnung 48 durchbrochen. Die Öffnung 48 ist aber nicht kreisrund, sondern erstreckt sich in Längsrichtung des Klemmringes 47 etwas mehr. Ein Bund 49 umläuft den Klemmring 47, jedoch nicht vollständig, sondern endet in einer Halteplatte 50. Die Halteplatte 50 nimmt eine Lage ein, in der sie sich in einem geringen Abstand zum Boden 51, parallel zu diesem erstreckt. Die Halteplatte 50 ist von einer Gewindebohrung 52 durchbrochen. Zwei Vorsprünge 53, 54 ragen in die Öffnung 48. Sie bilden die Arretierungen, mit welcher das Gehäuse 4 in seiner Lage festgelegt ist. Weiter ist an dem Klemmring 47 ein Mitnehmer 55 angeformt. Der Mitnehmer 55 durchdringt, von einem elastischen Stopfen 56 umschlossen, eine, an dem Boden des Isolierkörpers 62 angeformte Halterung 64.

Die lösbare Verbindung zwischen dem Einschraubstück 3 und dem Elektronikgehäuse 4 geschieht nun derart, daß der mit dem Dichtring 37 versehene Zapfen 43 des Einschraubstükkes 3 in die Hülse 43 des Gehäuses 4 eingeführt wird. Danach erfolgt, nach dem Einschrauben der Zylinderschraube 46, das Einlegen des Klemmringes 47 auf den Boden 42 des Innenraumes 44 des Gehäuses 4. In dieser Lage durchdringt bereits der Zapfen 34 die Öffnung 48. Nun wird der Klemmring 47 parallel zur Oberfläche des Boden 42 verschoben, bis die Zylinderschraube 46 eine Lage über dem, in dem Boden 42 befindlichen Stützloch 57 einnimmt. In dieser Lage ragen die beiden Vorsprünge 53, 54 in die Nut 36. Mittels eines Schraubendrehers wird nun die leicht zugängliche Zylinderschraube 46 weiter in die Gewindebohrung 52 eingedreht. Dabei stützt sich die Zylinderschraube 46 am Boden des Stützloches 57 ab. Die Zylinderschraube 46 hebt die Halteplatte 50 des Klemmringes 47 an. Dabei vollzieht der Klemmring 47 einen Schwenkbewegung, um den Drehpunkt 58. Die Schwenkbewegung kann solange fortgesetzt werden, bis sich die Vorsprünge 53, 54 an der ringförmigen, dem Innenraum 44 zugewandten Wandfläche der Nut 36 abstützen. Die unterschiedlichen Hebelarme zwischen dem Drehpunkt 58 und den Vorsprüngen 53, 54 einerseits und zwischen den Vorsprüngen 53, 54 und der Zylinderschraube 46, andererseits bewirkt, daß zwischen den Vorsprüngen 53, 54 und der Wandung der Nut 36 eine Klemmverbindung entsteht, welche das Elektronikgehäuse 4 in seiner Lage stabil festlegt. Zu Veränderung der Lage des Elektronikgehäuses 4 braucht nun lediglich die leicht zugängliche Zylinderschraube 46 gelöst zu werden, wodurch das Elektronikgehäuse 4 auf dem Zapfen 34 fast 360° um seine Symmetrieachse gedreht werden kann und während dieser Bewegung lediglich durch die, nun gleitend die Nut 36 durchdringenden Vorsprünge 53, 54 gehalten ist. Durch Anziehen der Zylinderschraube 46 wird die Klemmverbindung wieder hergestellt und das Elektronikgehäuse 4 in seiner neuen Lage gegenüber dem Einschraubstück 3 festgelegt.

Unmittelbar nach der Montage des Klemmringes 47 kann auch die elektronische Schaltung durch Einsetzen des kompletten Isolierkörpers 62 in den Innenraum 44 montiert werden. Dies kann deshalb geschehen, weil die einzige Verbindungsschraube 46 der lösbaren Verbindung trotz eingeführter elektronischer Schaltung 6 durch den Raum 45 jederzeit leicht zugänglich ist.

Im montiertem Zustand nimmt der Isolierkörper 62 eine Lage ein, bei welcher der Mitnehmer 55 der Klemmscheibe 47 einschließlich dem elastischen Zapfen 56 die Halterung 64 durchdringt. Dies hat zur Folge, daß bei jeder Drehbewegung des Gehäuses 4 um seine Symmetrieachse auch der Isolierkörper 62, in seiner Lage gehalten, mitgeführt wird, damit ist die Beschädigung der zwischen dem Sensor 2 und der elektronischen Schaltung 6 bestehenden inneren Verbindungsleitungen durch die axiale Drehbewegung des Elektronikgehäuses 4 ausgeschlossen.

## Patentansprüche

1. Vorrichtung zur Befestigung eines Gehäuses, insbesondere eines Elektronikgehäuses (4) eines Füllstandsmeßgerätes, mit einem Einschraubstück (3), mittels welchem das Füllstandsmeßgerät in der das Meßmedium umschließenden Wandung befestigt ist, einem Sensor (2) zur physikalischen Aufnahme des Meßwertes und einer lösbaren Verbindung, durch welche das Elektronikgehäuse (4) mit dem Einschraubstück (3) verbunden und axial in seiner Lage gegenüber dem Sensor (2) festgelegt und gehalten ist, **dadurch gekennzeichnet**, daß die lösbare Verbindung zwischen dem Elektronikgehäuse (4) und dem Einschraubstück (3) von einer einzigen, eine Klemmscheibe (47) durchdringenden Schraube (46) und von in eine Nut (36) des Einschraubstückes (3) eingreifenden Vorsprüngen (53, 54) der Klemmscheibe (47) gebildet ist.

2. Vorrichtung nach Anspruch 1, **dadurch gekennzeichnet**, daß die Klemmscheibe (47) durch Festziehen oder Lösen der Schraube (46) um einen Drehpunkt (58) verschwenkbar ist.

3. Vorrichtung nach Anspruch 1, **dadurch gekennzeichnet**, daß die Vorsprünge (53, 54) der Klemmscheibe (47) sich derart an einer Ringfläche der Nut (36) des Einschraubstückes (3) abstützen, daß zwischen den Vorsprüngen (53, 54) und der Nut (36) eine Klemmverbindung gebildet ist, welche das Elektronikgehäuse (4) in jeder axialsymmetrischen Lage gegenüber dem Sensor festlegt.

4. Vorrichtung nach Anspruch 3, **dadurch gekennzeichnet**, daß die Klemmverbindung (36, 53, 54) durch ein- oder ausdrehen der Schraube (46) gebildet oder gelöst wird.

5. Vorrichtung nach Anspruch 4, **dadurch gekennzeichnet**, daß sich die Schraube (46), eine Gewindebohrung (52) der Halteplatte (50), der Klemmscheibe (47) durchdringend, am Boden (42) des Gehäuses (4) abstützt.

6. Vorrichtung nach Anspruch 1, **dadurch gekennzeichnet**, daß der Zapfen (34) des Einschraubstückes (3) die Hülse (43) des Gehäuses (4) und die Öffnung (48) der Klemmscheibe (47) durchdringt.

7. Vorrichtung nach Anspruch 6, **dadurch gekennzeichnet**, daß das Elektronikgehäuse (4) axialsymmetrisch um den Zapfen (34) schwenkbar ist.

8. Vorrichtung nach einem der vorhergehenden Ansprüche, **dadurch gekennzeichnet**, daß die von einem Isolierkörper (62) umschlossene Schaltung (6) des Füllstandsmeßgerätes (1), eine Lage im Innenraum (44) des Gehäuses (4) einnimmt, durch welche ein Freiraum (45) zum Lösen oder Festziehen der Schraube (46) gebildet ist.

9. Vorrichtung nach Anspruch 6, **dadurch gekennzeichnet**, daß die Klemmscheibe (47) seitlich parallel der Oberfläche des Bodens (42) des Gehäuses (4) verschiebbar ist.

10. Vorrichtung nach Anspruch 8, **dadurch gekennzeichnet**, daß an dem Isolierkörper (62) eine Halterung (64) angeformt ist, in welche der Mitnehmer (55) der Klemmscheibe (47) unter Einschließen eines elastischen Stopfens (56) so eingreift, daß bei dem axialsymmetrischen Verschwenken des Gehäuses (4) der Isolierkörper (62) in seiner Lage gehalten und mitgeführt ist.

11. Vorrichtung nach Anspruch 1, **dadurch gekennzeichnet**, daß die Verbindung zwischen Elektronikgehäuse (4) und Einschraubstück (3) staub- und spritzwasserdicht ist.

## Claims

1. A device for mounting a housing, particularly an electronics housing (4) of a level gauge, comprising a screw-in piece (3) by means of which the level gauge is mounted in the wall surrounding the medium to be measured, a sensor (2) responsive to the measurand, and a nonpermanent joint by which the electronics housing (4) is connected with the screw-in piece (3) and is axially fixed and held in position relative to the sensor (2), characterized in that the nonpermanent joint between the electronics housing (4) and the screw-in piece (3) is formed by a single screw (46) extending through a shim (47) and by projections (53, 54) of the shim (47) fitting into a groove (36) of the screw-in piece (3).

2. A device as claimed in claim 1, characterized in that the shim (47) is pivotable about a pivot point (58) by tightening or loosening the screw (46).

3. A device as claimed in claim 1, characterized in that the projections (53, 54) of the shim (47) are supported by an annular surface of the groove (35) of the screw-in piece (3) in such a way that a clamping connection is provided between the projections (52, 54) and the groove (36) which fixes the electronics housing (4) in any axially symmetrical position with respect to the sensor.

4. A device as claimed in claim 3, characterized in that the clamping connection (36, 53, 54) is formed by screwing in the screw (46) or released by unscrewing the screw (46).

5. A device as claimed in claim 4, characterized in that the screw (46), extending through a tapped hole (52) of the holding plate (50) of the shim (47), is supported by the bottom (42) of the housing (4).

6. A device as claimed in claim 1, characterized in that the journal (34) of the screw-in piece (3) extends through the sleeve (43) of the housing (4) and through the opening (48) of the shim (47).

7. A device as claimed in claim 6, characterized in that the electronics housing (4) is axially symmetrically pivotable about the journal (34).

8. A device as claimed in any one of the preceding claims, characterized in that the circuit (6) of the level gauge (1), which is enclosed by an insulating body (62), occupies a position in the interior (44) of the housing (4) by which a free space (45) is formed for loosening or tightening the screw (46).

9. A device as claimed in claim 6, characterized in that the shim (47) is movable sideward parallel to the surface of the bottom (42) of the housing (4).

10. A device as claimed in claim 8, characterized in that the insulating body (62) has a holder (64) formed thereon which is engaged by the dog (55) of the shim (47), with an elastic pad (56) being enclosed therebetween, so that during the axially symmetrical pivoting of the housing (4) the insulating body (62) is held in position and driven.

11. A device as claimed in claim 1, characterized in that the joint between the electronics housing (4) and the screw-in piece (3) is dustproof and splashproof.

## Revendications

1. Dispositif de fixation d'un boîtier, notamment d'un boîtier électronique (4) d'un appareil de mesure du niveau de remplissage, équipé d'une pièce vissée (3), au moyen de laquelle l'appareil de mesure du niveau de remplissage est fixé à la paroi entourant le milieu à mesurer, d'un capteur (2) pour la réception physique de la valeur de mesure et d'une liaison démontable au moyen de laquelle le boîtier électronique (4) est relié à la pièce vissée (3) et est fixé et maintenu axialement dans sa position par rapport au capteur (2), caractérisé en ce que la liaison démontable, entre le boîtier électronique (4) et la pièce vissée (3), est composée d'une seule vis (46) traversant une bague de serrage (47), et de parties saillantes (53, 54) de la bague de serrage (47) s'engageant dans une rainure (36) de la pièce vissée (3).

2. Dispositif selon la revendication 1, caractérisé en ce que la bague de serrage (47) peut pivoter autour d'un pivot (58) en serrant ou en desserrant la vis (46).

3. Dispositif selon la revendication 1, caractérisé en ce que les parties saillantes (53, 54) de la bague de serrage (47) s'appuient contre une surface annulaire de la rainure (36) de la pièce vissée (3), de telle sorte qu'il se forme, entre les parties saillantes (53, 54) et la rainure (36), une liaison par serrage qui fixe le boîtier électronique (4) dans chaque position axisymétrique par rapport au capteur.

4. Dispositif selon la revendication 3, caractérisé en ce que la liaison par serrage (36, 53, 54) est serrée ou desserrée en vissant ou en dévissant la vis (46).

5. Dispositif selon la revendication 4, caractérisé en ce que la vis (46) de la bague de serrage (47), traversant un perçage fileté (52) de la plaque de fixation (50), s'appuie contre le fond (42) du boîtier (4).

6. Dispositif selon la revendication 1, caractérisé en ce que l'ergot (34) de la pièce vissée (3) traverse le manchon (43) du boîtier (4) et l'ouverture (48) de la bague de serrage (47).

7. Dispositif selon la revendication 6, caractérisé en ce que le boîtier électronique (4) peut pivoter de façon axisymétrique autour de l'ergot (34).

8. Dispositif selon l'une quelconque des revendications précédentes, caractérisé en ce que le circuit (6) de l'appareil de mesure du niveau de remplissage (1), entouré d'un corps isolant (62), prend une position dans l'espace intérieur (44) du boîtier (4), suivant laquelle un espace libre (45) est constitué pour desserrer ou serrer la vis (46).

9. Dispositif selon la revendication 6, caractérisé en ce que la bague de serrage (47) peut se déplacer latéralement, parallèlement à la surface du fond (42) du boîtier (4).

10. Dispositif selon la revendication 8, caractérisé en ce que, au niveau du corps isolant (62) est formée une fixation (64) dans laquelle l'élément d'entraînement (55) de la bague de serrage (47), entouré d'un bouchon élastique (56), s'engage de façon telle que, lorsque le boîtier (4) pivote de manière axisymétrique, le corps isolant (62) est maintenu dans sa position et est entraîné.

11. Dispositif selon la revendication 1, caractérisé en ce que la liaison entre le boîtier électronique (4) et la pièce vissée (3) est étanche à la poussière et aux projections d'eau.
